# EUROPEAN PATENT SPECIFICATION

(11) **EP 4 506 208 B1**
(45) Date of publication and mention of the grant of the patent: **03.06.2026**
(21) Application number: 23778222.2
(22) Date of filing: 28.03.2023
(51) Int. Cl.: B60L 53/80

(54) **UNLOCKING ASSEMBLY**
ENTRIEGELUNGSANORDNUNG
ENSEMBLE DE DÉVERROUILLAGE

(30) Priority: 02.04.2022 CN 202210352107
(43) Date of publication of application: 12.02.2025
(73) Proprietor: Aulton New Energy Automobile Technology Co., Ltd., Guangzhou, Guangdong 510700 (CN); Shanghai Dianba New Energy Technology Co., Ltd., Shanghai 201306 (CN)
(72) Inventor: ZHANG, Jianping, Shanghai 201306 (CN); WANG, Kaifeng, Shanghai 201306 (CN); LING, Chunlei, Shanghai 201306 (CN); ZHU, Ming, Shanghai 201306 (CN)
(74) Representative: Huang, Liwei
(86) International application number: PCT/CN2023/084410
(87) International publication number: WO 2023/185857

(56) References cited:
- WO-A1-2021/228205
- CN-A- 102 180 085
- CN-A- 109 501 569
- CN-A- 110 015 122
- CN-A- 111 231 752
- CN-A- 111 231 752
- CN-A- 113 212 231
- CN-A- 113 212 231
- CN-A- 113 997 826
- CN-A- 114 074 539
- CN-A- 114 074 539
- CN-A- 115 450 993
- CN-U- 217 539 208
- US-A1- 2019 344 651
- US-A1- 2020 317 081
- US-A1- 2020 411 822

## Description

This application claims priority to Chinese Patent Application No. 2022103521077 filed on April 2, 2022.

### TECHNICAL FIELD

The present invention relates to the field of power swapping, in particular to an unlocking assembly.

### BACKGROUND

In recent years, new energy vehicles have been developing rapidly, and relying on batteries as a driving energy, electric vehicles have the advantages of zero emission and low noise. With an increasing market share and frequency of use of electric vehicles, electric commercial vehicles, such as electric heavy trucks and electric light trucks, have also gradually appeared in their respective application scenarios, meanwhile, battery swapping stations for replacing battery packs for electric trucks have also been constructed correspondingly.

A battery swapping station is provided with battery swapping devices for replacing battery packs. During operation, the battery swapping device moves below a vehicle chassis, and an unlocking portion of the battery swapping device acts on a locking structure on the vehicle chassis to unlock the battery pack by the locking mechanism, and then the battery swapping device carries the battery pack and removes the entire battery pack out from the underneath of the vehicle. The battery swapping device in the prior art can be referred to in the solution disclosed in the application with an application number of CN201711244221.3 and entitled "Shuttle Battery Pack Replacement Device and Battery Swapping Station Containing the Same".

However, the solution still has the following problems: space below the chassis of the electric vehicle is limited, especially for heavy trucks, electric light trucks and other models, the space below the chassis is small, and the size of the required battery pack is large, after the battery pack is mounted to the chassis of the electric vehicle, the space reserved for the battery swapping device to enter into and leave from the underneath of the vehicle is even smaller, while the existing unlocking portion is only arranged on a battery swapping device, the unlocking portion needs to be set long enough in order to contact the locking mechanism on the vehicle chassis, then the battery swapping device is so high that it is difficult to enter into or leave from the space below the vehicle chassis. A locking device according to the preamble of claim1 is known from CN 111 231 752.

### SUMMARY

The technical problem to be solved in the present invention is to provide an unlocking assembly in order to overcome the problem of difficulty in entering into and leaving from the vehicle chassis due to an excessive height of the battery swapping device in the prior art.

In the present invention, the above technical problem is solved through the following technical solutions:
an unlocking assembly is configured to unlock a battery pack in an electric vehicle, wherein the electric vehicle is provided with a locking mechanism, the battery pack is locked and connected to the electric vehicle by means of the locking mechanism, and the unlocking assembly includes:
a first unlocking portion arranged in the battery pack and configured to drive the locking mechanism to move to an unlocking position to unlock the battery pack; and
a second unlocking portion arranged on a battery swapping device and configured to move the first unlocking portion that is located at an initial position in the battery pack to an extended position along a vertical direction to unlock the battery pack.

During operation, the second unlocking portion on the battery swapping device pushes the first unlocking portion within the battery pack to move upwards to abut the locking mechanism against the unlocking position. The first unlocking portion in the battery pack can serve as an extension of the second unlocking portion in the height direction, such that a second unlocking portion of a lower height can be used to unlock the locking mechanism, the overall height of the battery swapping device is reduced, and the battery swapping device can better adapt to the height of the vehicle chassis, thereby facilitating shuttling into and out from the underneath of the vehicle chassis.

Preferably, the battery pack is internally provided with an accommodation cavity that penetrates through along a vertical direction, the first unlocking portion includes an ejector rod mechanism, and the ejector rod mechanism is movably mounted in the accommodation cavity.

During operation, the second unlocking portion on the battery swapping device extends into the accommodation cavity and drives the ejector rod mechanism to extend into the battery pack and abut against the locking mechanism, so as to unlock the battery pack.

Preferably, the second unlocking portion is configured to push an input end at the bottom of the ejector rod mechanism and move the ejector rod mechanism to an extended position, and when the ejector rod mechanism is in the extended position, an output end at the top of the ejector rod mechanism extends out of an opening of the accommodation cavity and is above the surface of the battery pack.

The output end at the top of the ejector rod mechanism can act on the locking structure for unlocking when the output end is in the extended position, and the second unlocking portion directly pushes the input end of the ejector rod mechanism, thereby reducing the difficulty in alignment between the second unlocking portion and the locking mechanism, and during unlocking, pushing can be realized only by aligning the second unlocking portion with the ejector rod mechanism, and meanwhile, interferences of the locking mechanism and the surface of the battery pack in the unlocking process can be avoided.

Preferably, the locking mechanism includes a locking tongue and a locking base, wherein the locking base is provided with a locking slot allowing a locking shaft of the battery pack to enter and lock, the locking tongue moves relative to the locking base to open or close the locking slot, and an output end of the ejector rod mechanism drives the locking tongue to an unlocking position to open the locking slot, therefore, the ejector rod mechanism can drive the locking mechanism to unlock.

When the locking tongue is driven to move through the input end of the ejector rod mechanism, vertical movement of the ejector rod mechanism is directly converted into movement of the locking tongue, therefore, a single locking slot is conveniently opened and unlocked, and the unlocking efficiency and success rate are improved.

Preferably, the locking mechanism includes a locking connecting rod and an unlocking block, wherein the locking connecting rod is connected to the locking tongue, and the output end acts on the unlocking block on the locking connecting rod to drive the locking tongue to open the locking slot. During operation, the output end applies a force to the unlocking block on the locking connecting rod to move the locking connecting rod upwards, and further jointly drives the locking tongue to move to the unlocking position.

By acting on the locking connecting rod through the ejector rod mechanism, a plurality of locking tongues can be driven to move in order to open a plurality of locking slots at the same time, thereby synchronously unlocking a plurality of locking bases and improving the unlocking efficiency.

Preferably, the first unlocking portion includes a reset member for resetting the ejector rod mechanism to the initial position after an acting force of the second unlocking portion is withdrawn.

A reset member is arranged such that the second unlocking portion is conveniently reset into the battery pack after unlocking is finished, thereby facilitating the next unlocking operation, and constituting a closed loop of operation to repeat unlocking the battery pack for multiple times.

Preferably, the battery swapping device includes a disassembly platform, a second unlocking portion is arranged on the disassembly platform, and when the disassembly platform is located in a battery removal position below the electric vehicle, the second unlocking portion is at least partially inserted into the battery pack to act on the first unlocking portion, such that the first unlocking portion extends out to unlock the battery pack.

The disassembly platform is arranged to drive the second unlocking portion to move along a vertical or horizontal direction, meanwhile, when the battery is removed, the second unlocking portion is inserted into the battery pack in order to abut against and push the first unlocking portion to extend out for an unlocking operation, and meanwhile, the battery pack and the disassembly platform of the battery swapping device are positioned and connected, such that subsequently the battery pack can be driven to move along a horizontal direction.

Preferably, when the disassembly platform carries only the weight of the battery pack, the second unlocking portion is at least partially inserted into the battery pack.

By inserting the second unlocking portion into the battery pack, the disassembly platform and the battery pack are positioned, and positions of the battery pack, the second unlocking portion and the tray along the horizontal direction are relatively fixed, therefore, it is convenient for the disassembly platform to drive the battery pack to move synchronously.

Preferably, the disassembly platform includes a first moving platform, the second unlocking portion includes a second unlocking rod, the second unlocking rod is arranged on the first moving platform, the first moving platform is provided with a battery supporting portion for elastically supporting a battery pack, and when the disassembly platform is located in a battery removal position below the electric vehicle, the second unlocking rod at least partially extends out of the surface of the battery supporting portion to be inserted into the battery pack.

A battery supporting portion is arranged to elastically support the battery pack, such that the battery pack on the disassembly platform is in a flexible bearing state, thereby playing a role of buffering to avoid hard collision when the battery pack is placed on the disassembly platform. Meanwhile, in the process of removing or mounting the battery pack, while the battery swapping device, the battery pack and the electric vehicle are aligned, the battery pack can be removed and mounted in a floating manner, and the angle of mounting or removing battery packs at the bottom of the electric vehicle can be adapted to perform adaptive adjustment for alignment, thereby avoiding difficulty in disassembly and failure of battery swapping due to over-positioning; meanwhile, the second unlocking rod is inserted into the battery pack and can conveniently act on the first unlocking portion in the battery pack for an unlocking operation, therefore, the disassembly platform and the battery pack are positioned, positions of the battery pack, the disassembling platform and the second unlocking rod are relatively fixed, and it is convenient for the disassembly platform to drive the battery pack to move synchronously.

Preferably, the battery supporting portion includes a tray and an elastic mechanism, wherein the tray is connected to the first moving platform through the elastic mechanism, and the tray is provided with a through hole allowing the second unlocking rod to extend outwards.

The elastic mechanism can be adopted to buffer an impact force when the battery falls onto a tray, thereby reducing damage to the battery swapping device caused by the impact force when the battery falls down, and prolonging the service life of the battery swapping device, meanwhile, the battery pack can be removed and mounted in a floating manner, and the angle of mounting or removing battery packs at the bottom of the electric vehicle can be adapted to perform adaptive adjustment for alignment, and through holes are arranged to guide movement of the tray in the process of removing and mounting the battery pack, thereby avoiding deviation of the tray from the horizontal position relative to the second unlocking rod, and leading to misalignment between the second unlocking rod and the first unlocking portion in the battery pack.

Preferably, the battery swapping device further includes a lifting mechanism to lift the disassembly platform to a battery removal position, such that the second unlocking portion pushes out the first unlocking portion.

The second unlocking portion conveniently moves to a position abutted against the first unlocking portion along a vertical direction, to perform an unlocking operation.

Preferably, when the first unlocking portion drives the locking mechanism to move to an unlocking position, the first moving platform carries the battery pack for driving the battery pack to move horizontally along a first direction to remove the battery pack.

Through movement of the first moving platform, the locking shaft of the battery pack is driven to move from a locking point inside the locking slot to an opening, and move out of the locking mechanism through the opening.

Preferably, the first moving platform is further configured to drive the battery pack to move horizontally along a direction opposite to the first direction to an unlocked pre-tightening position to release limitation on the locking mechanism, such that the locking mechanism is driven by the first unlocking portion to move to the unlocking position.

The locking mechanism can smoothly move to the unlocking position under the pushing of the first unlocking portion, thereby improving reliably and prolonging service life of the locking mechanism.

Beneficial effects of the present invention are as follows:

the first unlocking portion in the battery pack can serve as an extension of the second unlocking portion in a height direction, such that the locking mechanism can be unlocked by means of the second unlocking portion with a lower height, in this way, the overall height of the battery swapping device is reduced, such that the battery swapping device can better adapt to the height of a vehicle chassis and can conveniently shuttle into and out from the underneath of the vehicle chassis.

### BRIEF DESCRIPTION OF THE DRAWINGS

FIG. 1 is a three-dimensional structural schematic diagram of a power swapping device in one embodiment of the present invention;
FIG. 2 is a three-dimensional structural schematic diagram of a disassembly platform in one embodiment of the present invention;
FIG. 3 is a three-dimensional structural schematic diagram of a driving apparatus of a first moving platform and a second moving platform in one embodiment of the present invention;
FIG. 4 is a three-dimensional structural schematic diagram of a lifting apparatus of a disassembly platform in one embodiment of the present invention;
FIG. 5 is a three-dimensional structural schematic diagram of a battery pack in one embodiment of the present invention;
FIG. 6 is a three-dimensional structural schematic diagram of a first unlocking portion on a battery pack in one embodiment of the present invention;
FIG. 7 is a sectional structural schematic diagram of a first unlocking portion in one embodiment of the present invention;
FIG. 8 is a sectional structural schematic diagram of a locking mechanism in one embodiment of the present invention in a locked state;
FIG. 9 is a sectional structural schematic diagram of a locking mechanism in one embodiment of the present invention in an unlocked state;

Reference numerals in the figures:
battery swapping device 10, first unlocking portion 100, first unlocking rod 110, input end 111, output end 112, reset member 120, accommodation cavity 130, locking mechanism 200, locking base 210, locking slot 211, locking tongue 220, locking connecting rod 230, unlocking block 231, second unlocking portion 300, second unlocking rod 310, battery pack 400, locking shaft 410, disassembly platform 500, first moving platform 510, first slide rail 511, first horizontal moving apparatus 512, positioning rod 513, tray 514, elastic mechanism 515, second moving platform 520, position-limiting rod 521, second slide rail 522, second horizontal moving apparatus 523, lifting mechanism 530, cam 531.

### DETAILED DESCRIPTION OF THE EMBODIMENTS

The present invention will be further described below through embodiments, but the present invention is not thus limited to the scope of the embodiments described.

The present invention will be further described below through embodiments, but the present invention is not thus limited to the scope of the embodiments described.

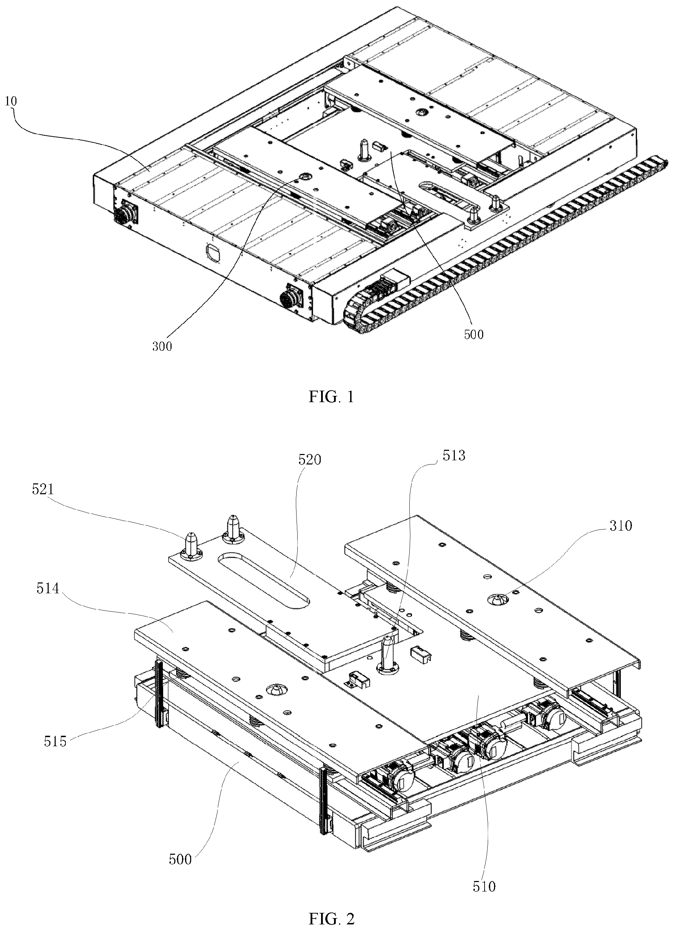

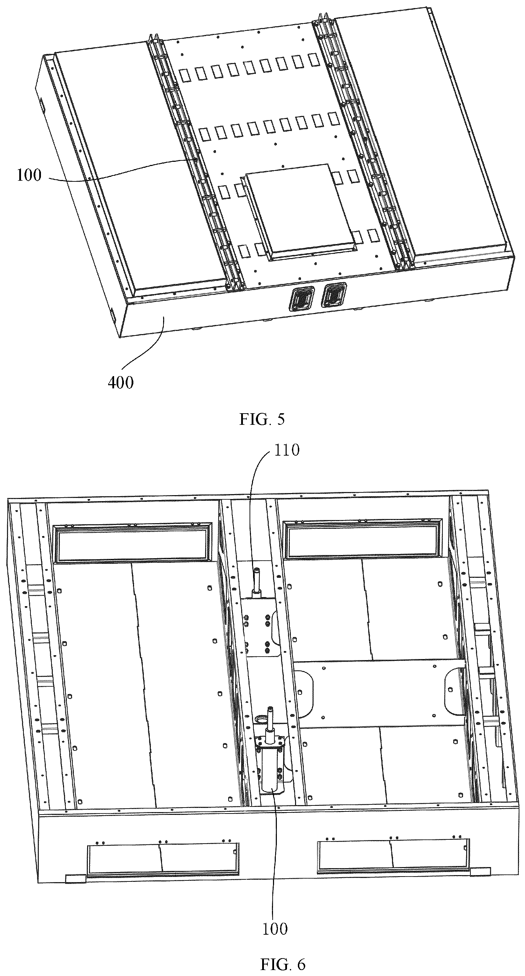

In combination with FIG. 1, FIG. 5 and FIG. 6, the present embodiment provides an unlocking assembly configured to unlock a battery pack 400 in an electric vehicle, a locking mechanism 200 is arranged on a chassis of an electric vehicle, and the battery pack 400 is locked and connected to the electric vehicle by means of the locking mechanism 200.

The unlocking assembly includes a first unlocking portion 100 arranged in the battery pack 400, and the first unlocking portion 100 is configured to drive the locking mechanism 200 to move to an unlocking position to unlock the battery pack 400; the unlocking assembly further includes a second unlocking portion 300 arranged on a battery swapping device 10, and the second unlocking portion 300 is configured to move the first unlocking portion 100 that is located at an initial position in the battery pack 400 to an extended position along a vertical direction to unlock the battery pack 400.

Specifically, the first unlocking portion 100, the second unlocking portion 300 and the locking mechanism 200 are arranged in the same vertical direction, and during operation, the second unlocking portion 300 on the battery swapping device 10 pushes the first unlocking portion 100 within the battery pack 400 to move upwards and abuts the locking mechanism 200 against the unlocking position.

With such a structure, the second unlocking portion 300 on the battery swapping device 10 can indirectly apply an acting force to the locking mechanism 200 through the first unlocking portion 100 within the battery pack 400 to unlock the locking mechanism 200. The first unlocking portion 100 may serve as an extension of the second unlocking portion 300 in a height direction, such that the locking mechanism 200 can be unlocked by means of the second unlocking portion 300 with a lower height. In this way, the overall height of the battery swapping device 10 is reduced, such that the battery swapping device 10 can better adapt to the height of the vehicle chassis and can conveniently shuttle into and out from the underneath of the vehicle chassis. In addition, when the second unlocking portion 300 is arranged in the battery pack 400, the space in height will not be additionally occupied, and the overall structure is lower and more compact, thereby facilitating shuttling into and out of the vehicle chassis.

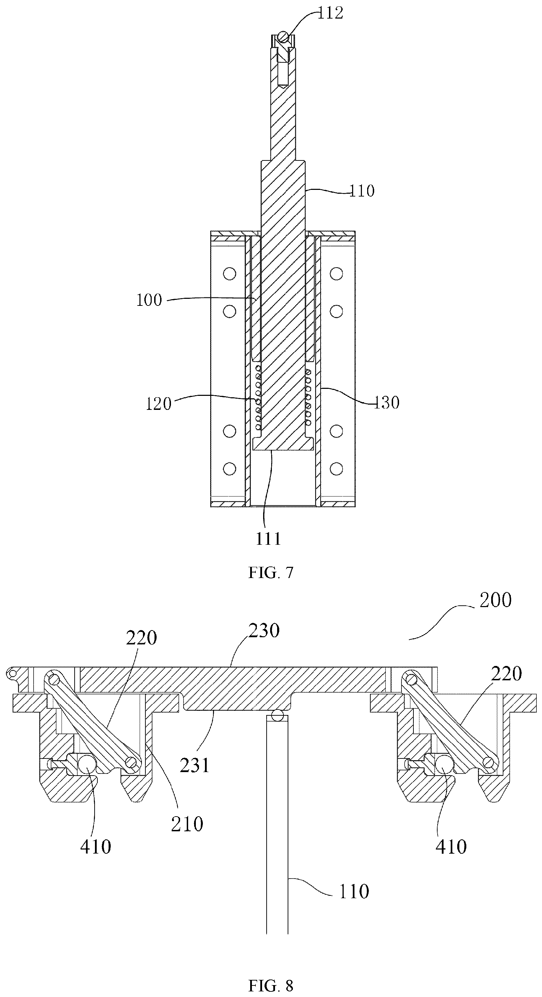

In combination with FIG. 7, the battery pack 400 is internally provided with an accommodation cavity 130 that penetrates through along a vertical direction, and an outlet above the accommodation cavity 130 is arranged corresponding to the locking mechanism 200, and an inlet below the accommodation cavity 130 can be arranged corresponding to the second unlocking portion 300 on the battery swapping device 10. The first unlocking portion 100 includes an ejector rod mechanism, and the ejector rod mechanism is movably mounted in the accommodation cavity 130, and movable mounting mentioned in the present invention means that the ejector rod mechanism can move up and down relative to the accommodation cavity 130.

Specifically, the ejector rod mechanism includes a first unlocking rod 110 and a mounting member arranged within the accommodation cavity 130, wherein the first unlocking rod 110 is mounted to the battery pack 400 through the mounting member and is elastically connected to the mounting member. The elastically connected first unlocking rod 110 can reduce impact, avoid a large impact on the locking mechanism 200 during unlocking, and prolong the service life. Elastic connection may be achieved by means of a known structural member having elasticity, or by means of various known structures that retract and enlarge through such medium as liquid or gas, e.g., a cylinder. Elastic connection can reduce impact, but in other embodiments, the first unlocking rod 110 can also be connected to the mounting member in a non-elastic manner, such as rigid connection.

The second unlocking portion 300 is configured to push the input end 111 at the bottom of the ejector rod mechanism to move the ejector rod mechanism to an extended position, and when the ejector rod mechanism is in the extended position, the output end 112 at the top of the ejector rod mechanism extends out of the opening of the accommodation cavity 130 and is above the surface of the battery pack 400. The second unlocking portion 300 directly pushes the input end 111 of the ejector rod mechanism, thereby reducing difficulty in alignment between the second unlocking portion 300 and the locking mechanism 200, and during unlocking, pushing can be achieved only by aligning the second unlocking portion 300 with the ejector rod mechanism, meanwhile, interferences of the locking mechanism 200 and the surface of the battery pack 400 in the unlocking process can be avoided.

Specifically, the input end 111 is the bottom of the first unlocking rod 110 and the output end 112 is the top of the first unlocking rod 110, and during unlocking, the second unlocking portion 300 penetrates into the accommodation cavity 130 and abuts against the input end 111 to lift the first unlocking rod 110 relative to the accommodation cavity 130, and further the output end 112 extends out of the accommodation cavity 130 and is above the surface of the battery pack 400. The output end 112 can act on the locking mechanism 200 to unlock the locking mechanism 200.

The first unlocking portion 100 includes a reset member 120 for resetting the ejector rod mechanism to the initial position after the acting force of the second unlocking portion 300 is withdrawn.

Specifically, the reset member 120 is an elastic member sleeved onto the first unlocking rod 110, and the elastic member is configured to apply a downward acting force to the first unlocking rod 110 to enable the first unlocking rod 110 to return to its initial position within the battery pack 400. In addition, the elastic member can absorb impact to avoid great impacts to the locking mechanism 200 during unlocking, thereby improving the service life. Meanwhile, the elastic member set in a sleeved manner can reduce space, such that the structure is more compact, and the first unlocking rod 110 also guides and limits the elastic member, to avoid the elastic member to be disengaged. In the present embodiment, the elastic member is preferably a spring, and may also be a torsion spring, a coil spring and various other known elastic structural members.

In the initial state, i.e., without being abutted by the second unlocking portion 300, the bottom end of the first unlocking rod 110 abuts against a position-limiting plate in the accommodation cavity 130. The first unlocking rod 110 is limited by the position-limiting plate to avoid falling off of the first unlocking rod 110.

In the unlocked state, the second unlocking portion 300 penetrates through the accommodation cavity 130, and drives the first unlocking rod 110 to extend upwards and to be above the battery pack 400 against the elastic force of the reset member 120.

In the reset state, the second unlocking portion 300 leaves the accommodation cavity 130, and an elastic potential energy of the reset member 120 is released and the first unlocking rod 110 is driven to move downwards to abut against the position-limiting plate, thereby further restoring to the initial position.

A reset member 120 is arranged such that the second unlocking portion 300 is conveniently reset into the battery pack after unlocking is finished, thereby facilitating the next unlocking operation, and constituting a closed loop of operation to allow the second unlocking portion 300 to repeat the unlocking action for multiple times.

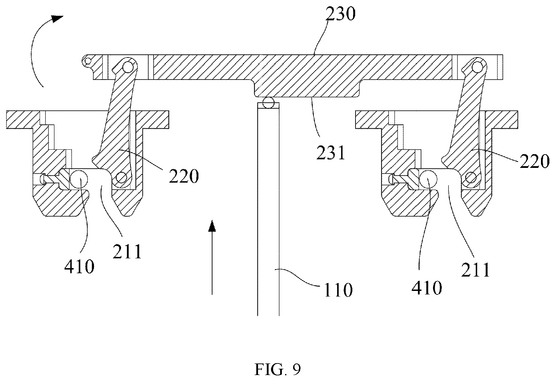

In combination with FIG. 8 and FIG. 9, in the present embodiment, the locking mechanism 200 includes a locking tongue 220 and a locking base 210, wherein the locking base 210 is provided with a locking slot 211 allowing a locking shaft 410 of the battery pack 400 to enter and lock, the locking tongue 220 moves relative to the locking base 210 to open or close the locking slot 211, and an output end 112 of the ejector rod mechanism drives the locking tongue 220 to move to an unlocking position to open the locking slot 211, the output end 112 of the ejector rod mechanism may directly act on one end of the locking tongue 220 to drive the locking tongue 220 to move to the unlocking position, thereby realizing unlocking. When the locking tongue 220 is driven to move through the input end 112 of the ejector rod mechanism, vertical movement of the ejector rod mechanism is directly converted into movement of the locking tongue 220, thereby facilitating to open and unlock a single locking slot 211 and improving the unlocking efficiency and success rate.

The locking mechanism 200 further includes a locking connecting rod 230 and an unlocking block 231, wherein the locking connecting rod 230 is connected to the locking tongue 220, and the output end 112 can act on the locking connecting rod 230 to drive the locking tongue 220 to open the locking slot 211.

Specifically, the locking connecting rod 230 is movably connected to the plurality of locking bases 210 respectively through the plurality of locking tongues 220, an unlocking surface extending along a length direction of the locking connecting rod 230 is arranged at the bottom of the locking connecting rod 230, and the first unlocking portion 100 can abut against the unlocking surface and jack up the locking connecting rod 230 under the action of an external force, so as to drive the locking tongue 220 to open the locking slot 211, specifically, both ends of the plurality of locking tongues 220 are articulated with both the locking base 210 and the locking connecting rod 230, and when the locking connecting rod 230 is lifted, the locking tongue 220 rotates to open a space in the locking slot 211, such that the locking shaft 410 on the battery pack 400 can horizontally move rightwards. Meanwhile, the locking base 210 remains fixed, so the moving trajectory of the locking connecting rod 230 is not straight line translation, while a horizontal rightward movement exists along with an upward movement, therefore, the locking tongue 220 is jointly driven to rotate rightwards to further open the space of the locking slot 211, so as to allow the locking shaft 410 to move out.

By acting on the locking connecting rod 230 through the ejector rod mechanism, the plurality of locking tongues 220 can be driven to move to open a plurality of locking slots 211 at the same time, thereby unlocking the plurality of locking bases 210 synchronously and improving the unlocking efficiency.

When the locking shaft 410 horizontally moves rightwards within the locking slot 211, the first unlocking rod 110 always abuts against and acts on the unlocking surface to keep the locking tongue 220 in an open state, thereby ensuring that the locking member can smoothly move out of the locking slot 211, and improving reliability of unlocking.

The locking connecting rod 230 includes an unlocking block 231, the unlocking block 231 extends towards the locking base 210, an unlocking surface which extends horizontally is arranged at the bottom of the unlocking block 231, and the first unlocking rod 110 acts on the unlocking surface of the unlocking block 231. The horizontally extending unlocking surface allows the first unlocking portion 100 to abut against the unlocking block 231 and not to be stuck in a certain position in a process in which the first unlocking portion 100 moves relative to the locking connecting rod 230, thereby improving the stability of unlocking. The unlocking surface is a horizontal surface with greater fault tolerance, and the first unlocking rod 110 can be always kept within the unlocking surface in the event of misalignment or existence of a torsion angle.

In other embodiments, the unlocking surface may also be arranged as an upwardly concave square, an upwardly concave arc, an upwardly concave triangle or an upwardly concave rhombus, and extends along a length direction of the locking connecting rod 230. The unlocking surface is an upwardly concave square and can limit the first unlocking rod 110, such that the first unlocking rod 110 cannot be disengaged from the unlocking surface during unlocking. The unlocking surface is an upwardly concave arc, an upwardly concave triangle or an upwardly concave rhombus, can form an optimal unlocking line together with the first unlocking rod 110 and can be appropriately tolerant, such that the first unlocking rod 110 moves along the length direction of the locking connecting rod 230 within the unlocking surface and the unlocking device is convenient to stay.

In combination with FIGS. 1, 2 and 3, in the present embodiment, the battery swapping device 10 includes a disassembly platform 500, the second unlocking portion 300 is arranged on the disassembly platform 500, and when the disassembly platform 500 is located in a battery removal position below the electric vehicle, the second unlocking portion 300 is at least partially inserted into the battery pack 400, so as to act on the first unlocking portion 100 and enable the first unlocking portion 100 to extend out to unlock the battery pack 400.

The disassembly platform 500 is arranged to drive the second unlocking portion 300 to move along the vertical or horizontal direction, meanwhile, when the battery is removed, the second unlocking portion 300 is inserted into the battery pack 400 in order to abut against and push the first unlocking portion 100 to extend out for an unlocking operation, and meanwhile, the battery pack 400 and the disassembly platform 500 of the battery swapping device 10 are positioned and connected, such that subsequently the battery pack 400 can be driven to move along a horizontal direction.

Preferably, the disassembly platform 500 includes a first moving platform 510. The first moving platform 510 is configured to carry the battery pack 400. A second unlocking portion 300 includes a second unlocking rod 310, the second unlocking rod 310 is arranged on the first moving platform 510, and the first moving platform 510 is further provided with a battery supporting portion for elastically supporting the battery pack 400, and when the disassembly platform 500 is in the battery removal position below the electric vehicle, the second unlocking rod 310 at least partially extends out of the surface of the battery supporting portion to be inserted into the battery pack 400.

A battery supporting portion is arranged to elastically support the battery pack 400, such that the battery pack 400 on the disassembly platform 500 is in a flexible bearing state, thereby playing a role of buffering to avoid hard collision when the battery pack 400 is placed on the disassembly platform 500. Meanwhile, in the process of removing or mounting the battery pack 400, while the battery swapping device 10, the battery pack 400 and the electric vehicle are aligned, the battery pack 400 can be removed and mounted in a floating manner, and the angle of mounting or removing battery packs at the bottom of the electric vehicle can be adapted to perform adaptive adjustment for alignment, thereby avoiding difficulty in disassembly and failure of battery swapping due to over-positioning; meanwhile, the second unlocking rod 310 is inserted into the battery pack 400 and can conveniently act on the first unlocking portion 100 in the battery pack 400 for an unlocking operation, the disassembly platform 500 and the battery pack 400 are positioned, and positions of the battery pack 400, the disassembling platform 500 and the second unlocking rod 310 along the horizontal direction are relatively fixed, therefore, it is convenient for the disassembly platform to drive the battery pack to move synchronously.

**In** the present embodiment, the battery supporting portion includes a tray 514 and an elastic mechanism 515, wherein the tray 514 is connected to the first moving platform 510 through the elastic mechanism 515. The number of trays 514 is two, and the two trays 514 are arranged on two sides above the first moving platform 510, respectively, and the elastic mechanism 515 can be a mechanism such as a spring that can provide an elastic restoring force upon compression.

The tray 514 is further provided with a through hole allowing the second unlocking rod 310 to extend out. During unlocking, the second unlocking rod 310 can extend from the through hole and can be inserted into the battery pack 400, so as to act on the first unlocking portion 100 in the battery pack 400 and unlock the battery pack 400.

Specifically, when the tray 514 is located in the battery removal position, the tray 514 abuts against the battery pack 400 on the vehicle chassis, and the elastic mechanism 515 arranged between the tray 514 and the first moving platform 510 is compressed by a counter-acting force exerted by the battery pack 400 on the tray 514, such that the tray 514 descends relative to the first moving platform 510, and the second unlocking rod 310 on the first moving platform 510 extends out of the tray 514 and acts on the battery pack 400 to push out the first unlocking portion 100 on the battery pack 400, so as to realize the unlocking operation.

The elastic mechanism 515 can be adopted to buffer an impact force when the battery pack 400 falls onto a tray 514, thereby reducing damage to the battery swapping device caused by the impact force when the battery pack 400 falls down, and prolonging the service life of the battery swapping device 10, meanwhile, the battery pack 400 can be removed and mounted in a floating manner, and the angle of mounting or removing battery packs 400 at the bottom of the electric vehicle can be adapted to perform adaptive adjustment for alignment, and through holes are arranged on the tray 514 to guide movement of the tray 514 in the process of removing and mounting the battery pack 400, thereby avoiding deviation of the tray 514 from the horizontal position relative to the second unlocking rod 310, and leading to misalignment between the second unlocking rod 310 and the first unlocking portion 100 in the battery pack 400.

In the present embodiment, when the disassembly platform 500 carries only the weight of the battery pack 400, the second unlocking portion 300 is at least partially inserted into the battery pack 400. The tray 514 carries only the battery pack 400, i.e., at this time, no other external force acts on the tray 514, and the tray 514 moves only under the gravity of the battery pack 400, and compresses the elastic mechanism 515 below the tray 514. The second unlocking rod 310 extends out of the tray 514 to be inserted into the battery pack 400, then the tray 514 and the battery pack 400 are positioned, and positions of the battery pack 400, the tray 514 and the second unlocking rod 310 along the horizontal direction are relatively fixed, therefore, it is convenient for the tray 514 to drive the battery pack 400 to move synchronously.

In the present embodiment, when the first unlocking portion 100 drives the locking mechanism 200 to move to the unlocking position, the first moving platform 510 carries the battery pack 400 for driving the battery pack 400 to move horizontally along the first direction to remove the battery pack 400.

The battery pack 400 is unlocked from the locking mechanism 200 in the electric vehicle by the first unlocking portion 100, such that after the locking mechanism 200 moves to the unlocked state, the locking shaft 410 of the battery pack 400 is still in the locking slot 211, and the first moving platform 510 moves horizontally along a first direction to move the battery pack 400 to the opening of the locking slot 211, and then the locking shaft 410 leaves the locking base 210 from the opening and is gradually disengaged from the locking mechanism 200 of the electric vehicle, thereby disassembling and moving the battery pack 400, simplifying operation and improving disassembly efficiency of the battery pack 400.

When the first unlocking portion 100 drives the locking mechanism 200 to move to the unlocking position, the first moving platform 510 carries the battery pack 400 to drive the battery pack 400 to move horizontally along a first direction for removing the battery pack 400. Specifically, the first direction is the direction in which the first moving platform 510 drives the locking shaft 410 on the battery pack 400 to move in the direction towards the opening of the locking slot 211, such that the locking shaft 410 moves out of the opening of the locking slot 211 onto the first moving platform 510.

The first moving platform 510 is further configured to drive the battery pack 400 to move horizontally along a direction opposite to the first direction to the unlocked pre-tightening position to release limitation on the locking mechanism 200, such that the locking mechanism 200 can be driven by the first unlocking portion 100 to move to the unlocking position.

In the locked state, the locking shaft 410 of the battery pack 400 abuts against the locking tongue 220 of the locking mechanism 200 to ensure that the battery pack 400 is firmly locked. At this time, the first unlocking rod 110 needs to apply a large jacking force to the locking mechanism 200, such that the locking tongue 220 rotates against the abutting force of the locking shaft 410 to open the opening. The position where the locking shaft 410 of the battery pack 400 is in contact with the locking tongue 220 will be abraded, the first unlocking rod 110, the locking shaft 410 and the locking mechanism 200 are easily damaged, meanwhile, unlocking easily fails, therefore, the battery pack 400 is first driven by the first moving platform 510 to move horizontally along a direction opposite to the first direction by a predetermined distance, then a certain distance exists between the locking shaft 410 of the battery pack 400 and the locking tongue 220 in the horizontal direction, thereby being convenient for the first unlocking rod 110 to jack up the locking connecting rod, and meanwhile avoiding abrasion to the locking mechanism 200 and the locking shaft 410.

In the present embodiment, the first moving platform 510 can slide along a first slide rail 511 arranged on the disassembly platform 500, and the extension direction of the first slide rail 511 is vertical to the movement direction of the battery swapping device 10.

The first moving platform 510 is connected to a first horizontal moving apparatus 512, wherein the first horizontal moving apparatus 512 includes a rotary motor and a screw rod connected to the rotary motor. The screw rod penetrates into and is in threaded engagement with bumps at the bottom of the first moving platform 510 or the second moving platform 520, thereby being capable of driving the first moving platform 510 to move along the first guide rail, alternatively, being capable of driving the second moving platform 520 to move along the second guide rail.

A positioning rod 513 is further arranged in the middle of the first moving platform 510, and the positioning rod 513 can align with the positioning hole on the battery pack 400 to position the battery pack 400 when the battery swapping device 10 moves to the battery removal position.

In other embodiments, the battery swapping device 10 further includes a lifting mechanism 530 configured to lift the disassembly platform 500 to a battery removal position, such that the second unlocking portion 300 abuts against and pushes out the first unlocking portion 100 to an extended position.

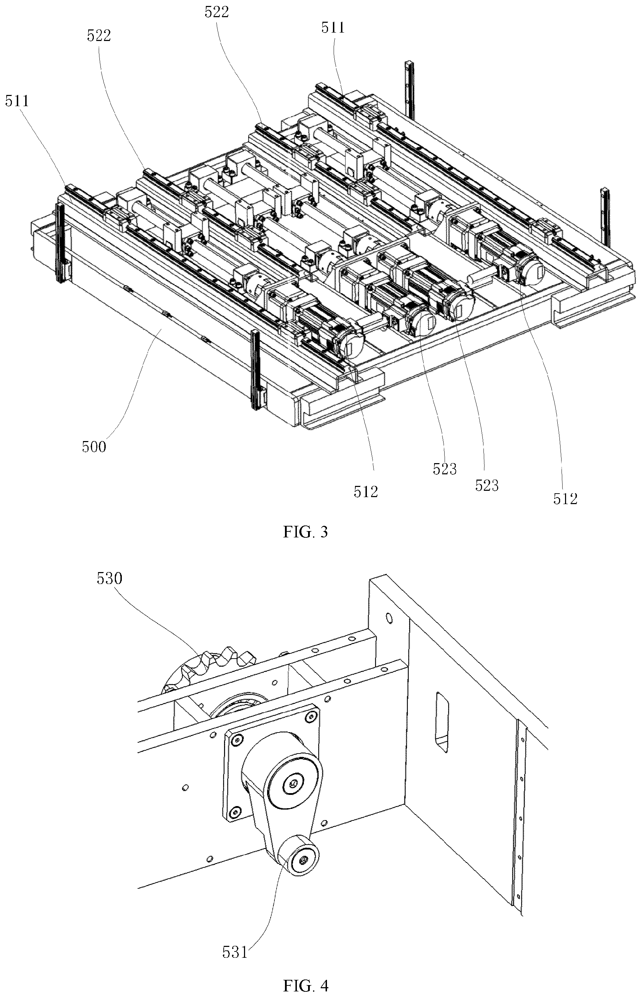

In combination with FIG. 3 and FIG. 4, specifically, the lifting mechanism 530 includes a cam 531 arranged below the disassembly platform 500 and a sliding block which is arranged on a vertical guide rail and connected to the disassembly platform 500, when the cam 531 rises along an operating trajectory, a distal end of the cam 531 can jack up the disassembly platform 500 to control the rise of the disassembly platform 500, and further drive the second unlocking portion 300 to rise and push out the first unlocking portion 100, when the cam 531 descends along its operating trajectory, the disassembly platform 500 in contact with the distal end of the cam 531 descends, and further the first unlocking portion 100 is driven to descend. Of course, in other embodiments, the lifting apparatus can also be a sliding block which operates along the rising and descending trajectories, wherein the disassembly platform 500 is connected with the sliding block, or the lifting apparatus can also be a vertically arranged screw rod, and the screw rod penetrates through the disassembly platform 500 to drive the disassembly platform 500 to move up and down.

In other embodiments, the disassembly platform further includes a second moving platform 520, and the second moving platform 520 can slide along a second slide rail 522 arranged on the disassembly platform 500. The first slide rail 511 is parallel to the second slide rail 522, and the extension direction of the first slide rail 511 and the second slide rail 522 is perpendicular to the movement direction of the battery swapping device 10. The second moving platform 520 is connected to the second horizontal moving apparatus 523. The second horizontal moving apparatus 523 has the same structure as the first horizontal moving apparatus 512.

Two position-limiting rods 521 are arranged at one end, away from the first moving platform 510, of the second moving platform 520, and when the battery swapping device 10 is in the battery removal position, the two position-limiting rods 521 can align with the position-limiting holes on the vehicle chassis to keep the battery swapping device 10 relatively fixed to the vehicle.

When the battery is removed, the first moving platform 510 translates until the positioning rod 513 corresponds to a positioning hole in the battery pack 400, the second unlocking rod 310 corresponds to the accommodation cavity 130 in the battery pack 400, and the second moving platform 520 translates until the position-limiting rod 521 corresponds to a limiting hole in the vehicle chassis. Afterwards, the disassembly platform 500 rises and the positioning rod 513 extends into the positioning hole of the battery pack 400 to position the battery pack 400. The second unlocking rod 310 is inserted into the accommodation cavity 130 within the battery pack 400, the first unlocking portion 100 is pushed to move the locking mechanism 200 to a locking position and then the locking slot 211 is opened, then the battery pack 400 is unlocked, and the position-limiting rod is inserted into the position-limiting holes on the vehicle chassis to position the battery swapping device and the vehicle.

Although specific embodiments of the present invention are described above, it should be understood by those skilled in the art that these are merely illustrative and that various changes or modifications can be made to these embodiments. Therefore, the protection scope of the present invention is limited by the appended claims.

## Claims

1. An unlocking assembly configured to unlock a battery pack (400) in an electric vehicle, wherein the electric vehicle is provided with a locking mechanism (200), the battery pack (400) is locked and connected to the electric vehicle by means of the locking mechanism (200), and the unlocking assembly comprises:
a first unlocking portion (100) arranged in the battery pack (400) and configured to drive the locking mechanism (200) to move to an unlocking position to unlock the battery pack (400); and
a second unlocking portion (300) arranged on a battery swapping device (10) and configured to move the first unlocking portion (100) that is located at an initial position in the battery pack (400) to an extended position along a vertical direction to unlock the battery pack (400),
the battery pack (400) is internally provided with an accommodation cavity (130) that penetrates through along a vertical direction, the first unlocking portion (100) comprises an ejector rod mechanism, and the ejector rod mechanism is movably mounted in the accommodation cavity (130),
the locking mechanism (200) comprises a locking tongue (220) and a locking base (210), the locking base (210) is provided with a locking slot (211) allowing a locking shaft (410) of the battery pack (400) to enter and lock, the locking tongue (220) moves relative to the locking base (210) to open or close the locking slot (211), and an output end (112) of the ejector rod mechanism drives the locking tongue (220) to move to the unlocking position to open the locking slot (211).

2. The unlocking assembly according to claim 1, wherein the second unlocking portion (300) is configured to push an input end (111) at the bottom of the ejector rod mechanism and move the ejector rod mechanism to an extended position, and when the ejector rod mechanism is in the extended position, the output end (112) at the top of the ejector rod mechanism extends out of an opening of the accommodation cavity (130) and is above the surface of the battery pack (400).

3. The unlocking assembly according to claim 1, wherein the locking mechanism (200) comprises a locking connecting rod (230) and an unlocking block (231), the locking connecting rod (230) is connected to the locking tongue (220), and the output end (112) acts on the unlocking block (231) on the locking connecting rod (230) to drive the locking tongue (220) to open the locking slot (211).

4. The unlocking assembly according to any one of claims 1-3, wherein the first unlocking portion (100) comprises a reset member for resetting the ejector rod mechanism to the initial position after an acting force of the second unlocking portion (300) is withdrawn.

5. The unlocking assembly according to any one of claims 1-4, wherein the battery swapping device (10) comprises a disassembly platform (500), the second unlocking portion (300) is arranged on the disassembly platform (500), and when the disassembly platform (500) is located in a battery removal position below the electric vehicle, the second unlocking portion (300) is at least partially inserted into the battery pack (400) to act on the first unlocking portion (100), such that the first unlocking portion (100) extends out to unlock the battery pack (400).

6. The unlocking assembly according to claim 5, wherein when the disassembly platform (500) carries only the weight of the battery pack (400), the second unlocking portion (300) is at least partially inserted into the battery pack (400).

7. The unlocking assembly according to claim 5 or 6, wherein the disassembly platform (500) comprises a first moving platform (510), the second unlocking portion (300) comprises a second unlocking rod (310), the second unlocking rod (310) is arranged on the first moving platform (510), the first moving platform (510) is provided with a battery supporting portion for elastically supporting a battery pack (400), and when the disassembly platform (500) is located in the battery removal position below the electric vehicle, the second unlocking rod (310) at least partially extends out of the surface of the battery supporting portion to be inserted into the battery pack (400).

8. The unlocking assembly according to claim 7, wherein the battery supporting portion comprises a tray (514) and an elastic mechanism (515), the tray (514) is connected to the first moving platform (510) through the elastic mechanism (515), and the tray (514) is provided with a through hole allowing the second unlocking rod (310) to extend outwards.

9. The unlocking assembly according to any one of claims 5-8, wherein the battery swapping device (10) further comprises a lifting mechanism (530) to lift the disassembly platform (500) to the battery removal position, such that the second unlocking portion (300) abuts against and pushes the first unlocking portion (100) to the extended position.

10. The unlocking assembly according to any one of claims 7-9, wherein when the first unlocking portion (100) drives the locking mechanism (200) to move to the unlocking position, the first moving platform (510) carries the battery pack (400) for driving the battery pack (400) to move horizontally along a first direction to remove the battery pack (400).

11. The unlocking assembly according to claim 10, wherein the first moving platform (510) is further configured to drive the battery pack (400) to move horizontally along a direction opposite to the first direction to an unlocked pre-tightening position to release limitation on the locking mechanism (200), such that the locking mechanism (200) is driven by the first unlocking portion (100) to move to the unlocking position.

## Patentansprüche

1. Entriegelungsanordnung, die dazu konfiguriert ist, einen Batteriepack (400) in einem Elektrofahrzeug zu entriegeln, wobei das Elektrofahrzeug mit einem Verriegelungsmechanismus (200) bereitgestellt ist, der Batteriepack (400) mittels des Verriegelungsmechanismus (200) verriegelt und mit dem Elektrofahrzeug verbunden ist und die Entriegelungsanordnung Folgendes umfasst:
einen ersten Entriegelungsabschnitt (100), der in dem Batteriepack (400) angeordnet und dazu konfiguriert ist, den Verriegelungsmechanismus (200) anzutreiben, um sich zu einer Entriegelungsposition zu bewegen, um den Batteriepack (400) zu entriegeln; und
einen zweiten Entriegelungsabschnitt (300), der an einer Batteriewechselvorrichtung (10) angeordnet und dazu konfiguriert ist, den ersten Entriegelungsabschnitt (100), der sich in einer Anfangsposition in dem Batteriepack (400) befindet, zu einer Ausfahrposition entlang einer vertikalen Richtung zu bewegen, um den Batteriepack (400) zu entriegeln,
der Batteriepack (400) innen mit einem Aufnahmehohlraum (130) bereitgestellt ist, der entlang einer vertikalen Richtung durchdringt, der erste Entriegelungsabschnitt (100) einen Auswerferstangenmechanismus umfasst und der Auswerferstangenmechanismus bewegbar in dem Aufnahmehohlraum (130) montiert ist,
wobei der Verriegelungsmechanismus (200) eine Verriegelungszunge (220) und eine Verriegelungsbasis (210) umfasst, die Verriegelungsbasis (210) mit einem Verriegelungsschlitz (211) bereitgestellt ist, der ermöglicht, dass eine Verriegelungswelle (410) des Batteriepacks (400) eintritt und verriegelt, sich die Verriegelungszunge (220) relativ zu der Verriegelungsbasis (210) bewegt, um den Verriegelungsschlitz (211) zu öffnen oder zu schließen, und ein Ausgangsende (112) des Auswerferstangenmechanismus die Verriegelungszunge (220) antreibt, sich zu der Entriegelungsposition zu bewegen, um den Verriegelungsschlitz (211) zu öffnen.

2. Entriegelungsanordnung nach Anspruch 1, wobei der zweite Entriegelungsabschnitt (300) dazu konfiguriert ist, ein Eingangsende (111) an der Unterseite des Auswerferstangenmechanismus zu drücken und den Auswerferstangenmechanismus zu einer Ausfahrposition zu bewegen, und wenn der Auswerferstangenmechanismus in der Ausfahrposition ist, sich das Ausgangsende (112) an der Oberseite des Auswerferstangenmechanismus aus einer Öffnung des Aufnahmehohlraums (130) erstreckt und über der Oberfläche des Batteriepacks (400) ist.

3. Entriegelungsanordnung nach Anspruch 1, wobei der Verriegelungsmechanismus (200) eine Verriegelungsverbindungsstange (230) und einen Entriegelungsblock (231) umfasst, die Verriegelungsverbindungsstange (230) mit der Verriegelungszunge (220) verbunden ist und das Ausgangsende (112) auf den Entriegelungsblock (231) auf der Verriegelungsverbindungsstange (230) wirkt, um die Verriegelungszunge (220) anzutreiben, um den Verriegelungsschlitz (211) zu öffnen.

4. Entriegelungsanordnung nach einem der Ansprüche 1-3, wobei der erste Entriegelungsabschnitt (100) ein Rückstellelement zum Rückstellen des Auswerferstangenmechanismus zu der Anfangsposition umfasst, nachdem eine wirkende Kraft des zweiten Entriegelungsabschnittes (300) zurückgezogen ist.

5. Entriegelungsanordnung nach einem der Ansprüche 1-4, wobei die Batteriewechselvorrichtung (10) eine Demontageplattform (500) umfasst, der zweite Entriegelungsabschnitt (300) an der Demontageplattform (500) angeordnet ist und, wenn sich die Demontageplattform (500) in einer Batterieentfernungsposition unter dem Elektrofahrzeug befindet, der zweite Entriegelungsabschnitt (300) zumindest teilweise in den Batteriepack (400) eingesetzt ist, um auf den ersten Entriegelungsabschnitt (100) zu wirken, sodass sich der erste Entriegelungsabschnitt (100) heraus erstreckt, um den Batteriepack (400) zu entriegeln.

6. Entriegelungsanordnung nach Anspruch 5, wobei, wenn die Demontageplattform (500) nur das Gewicht des Batteriepacks (400) trägt, der zweite Entriegelungsabschnitt (300) zumindest teilweise in den Batteriepack (400) eingesetzt ist.

7. Entriegelungsanordnung nach Anspruch 5 oder 6, wobei die Demontageplattform (500) eine erste sich bewegende Plattform (510) umfasst, der zweite Entriegelungsabschnitt (300) eine zweite Entriegelungsstange (310) umfasst, die zweite Entriegelungsstange (310) an der ersten sich bewegenden Plattform (510) angeordnet ist, die erste sich bewegende Plattform (510) mit einem Batteriestützabschnitt zum elastischen Stützen eines Batteriepacks (400) bereitgestellt ist und, wenn sich die Demontageplattform (500) in der Batterieentfernungsposition unter dem Elektrofahrzeug befindet, sich die zweite Entriegelungsstange (310) zumindest teilweise aus der Oberfläche des Batteriestützabschnittes erstreckt, um in den Batteriepack (400) eingesetzt zu werden.

8. Entriegelungsanordnung nach Anspruch 7, wobei der Batteriestützabschnitt eine Schale (514) und einen elastischen Mechanismus (515) umfasst, die Schale (514) mit der ersten sich bewegenden Plattform (510) durch den elastischen Mechanismus (515) verbunden ist und die Schale (514) mit einem Durchgangsloch bereitgestellt ist, das ermöglicht, dass sich die zweite Entriegelungsstange (310) nach außen erstreckt.

9. Entriegelungsanordnung nach einem der Ansprüche 5-8, wobei die Batteriewechselvorrichtung (10) ferner einen Hubmechanismus (530) umfasst, um die Demontageplattform (500) zu der Batterieentfernungsposition anzuheben, sodass der zweite Entriegelungsabschnitt (300) an dem ersten Entriegelungsabschnitt (100) anliegt und diesen in die erstreckte Position drückt.

10. Entriegelungsanordnung nach einem der Ansprüche 7-9, wobei, wenn der erste Entriegelungsabschnitt (100) den Verriegelungsmechanismus (200) antreibt, um sich zu der Entriegelungsposition zu bewegen, die erste sich bewegende Plattform (510) den Batteriepack (400) trägt, um den Batteriepack (400) anzutreiben, um sich horizontal entlang einer ersten Richtung zu bewegen, um den Batteriepack (400) zu entfernen.

11. Entriegelungsanordnung nach Anspruch 10, wobei die erste sich bewegende Plattform (510) ferner dazu konfiguriert ist, den Batteriepack (400) anzutreiben, um sich horizontal entlang einer Richtung entgegengesetzt zu der ersten Richtung zu einer entriegelten Vorspannposition zu bewegen, um Begrenzung an dem Verriegelungsmechanismus (200) zu lösen, sodass der Verriegelungsmechanismus (200) durch den ersten Entriegelungsabschnitt (100) angetrieben wird, um sich zu der Entriegelungsposition zu bewegen.

## Revendications

1. Ensemble de déverrouillage conçu pour déverrouiller un bloc-batterie (400) dans un véhicule électrique, dans lequel le véhicule électrique est doté d'un mécanisme de verrouillage (200), le bloc-batterie (400) est verrouillé et relié au véhicule électrique au moyen du mécanisme de verrouillage (200), et l'ensemble de déverrouillage comprend :
une première partie de déverrouillage (100) agencée dans le bloc-batterie (400) et conçue pour entraîner le mécanisme de verrouillage (200) à se déplacer vers une position de déverrouillage pour déverrouiller le bloc-batterie (400) ; et
une seconde partie de déverrouillage (300) agencée sur un dispositif d'échange de batterie (10) et conçue pour déplacer la première partie de déverrouillage (100) qui est située à une position initiale dans le bloc-batterie (400) vers une position étendue le long d'une direction verticale pour déverrouiller le bloc-batterie (400),
le bloc-batterie (400) est doté en interne d'une cavité de logement (130) qui traverse en pénétrant le long d'une direction verticale, la première partie de déverrouillage (100) comprend un mécanisme de tige d'éjection, et le mécanisme de tige d'éjection est monté de manière mobile dans la cavité de logement (130),
le mécanisme de verrouillage (200) comprend une languette de verrouillage (220) et une base de verrouillage (210), la base de verrouillage (210) est dotée d'une fente de verrouillage (211) permettant à un arbre de verrouillage (410) du bloc-batterie (400) d'entrer et de se verrouiller, la languette de verrouillage (220) se déplace par rapport à la base de verrouillage (210) pour ouvrir ou fermer la fente de verrouillage (211), et une extrémité de sortie (112) du mécanisme de tige d'éjection entraîne la languette de verrouillage (220) à se déplacer vers la position de déverrouillage pour ouvrir la fente de verrouillage (211).

2. Ensemble de déverrouillage selon la revendication 1, dans lequel la seconde partie de déverrouillage (300) est conçue pour pousser une extrémité d'entrée (111) au fond du mécanisme de tige d'éjection et déplacer le mécanisme de tige d'éjection vers une position étendue, et lorsque le mécanisme de tige d'éjection est dans la position étendue, l'extrémité de sortie (112) au sommet du mécanisme de tige d'éjection s'étend hors d'une ouverture de la cavité de logement (130) et est au-dessus de la surface du bloc-batterie (400).

3. Ensemble de déverrouillage selon la revendication 1, dans lequel le mécanisme de verrouillage (200) comprend une tige de liaison de verrouillage (230) et un bloc de déverrouillage (231), la tige de liaison de verrouillage (230) est reliée à la languette de verrouillage (220), et l'extrémité de sortie (112) agit sur le bloc de déverrouillage (231) sur la tige de liaison de verrouillage (230) pour entraîner la languette de verrouillage (220) à ouvrir la fente de verrouillage (211).

4. Ensemble de déverrouillage selon l'une quelconque des revendications 1 à 3, dans lequel la première partie de déverrouillage (100) comprend un élément de réinitialisation en vue de réinitialiser le mécanisme de tige d'éjection à la position initiale après le retrait d'une force d'action de la seconde partie de déverrouillage (300).

5. Ensemble de déverrouillage selon l'une quelconque des revendications 1 à 4, dans lequel le dispositif d'échange de batterie (10) comprend une plateforme de désassemblage (500), la seconde partie de déverrouillage (300) est agencée sur la plateforme de désassemblage (500), et lorsque la plateforme de désassemblage (500) est située dans une position de retrait de batterie sous le véhicule électrique, la seconde partie de déverrouillage (300) est au moins partiellement insérée dans le bloc-batterie (400) pour agir sur la première partie de déverrouillage (100), de sorte que la première partie de déverrouillage (100) s'étende vers l'extérieur pour déverrouiller le bloc-batterie (400).

6. Ensemble de déverrouillage selon la revendication 5, dans lequel, lorsque la plateforme de désassemblage (500) porte uniquement le poids du bloc-batterie (400), la seconde partie de déverrouillage (300) est au moins partiellement insérée dans le bloc-batterie (400).

7. Ensemble de déverrouillage selon la revendication 5 ou 6, dans lequel la plateforme de désassemblage (500) comprend une première plateforme mobile (510), la seconde partie de déverrouillage (300) comprend une seconde tige de déverrouillage (310), la seconde tige de déverrouillage (310) est agencée sur la première plateforme mobile (510), la première plateforme mobile (510) est dotée d'une partie de support de batterie en vue de supporter élastiquement un bloc-batterie (400), et lorsque la plateforme de désassemblage (500) est située dans la position de retrait de batterie sous le véhicule électrique, la seconde tige de déverrouillage (310) s'étend au moins partiellement hors de la surface de la partie de support de batterie pour être insérée dans le bloc-batterie (400).

8. Ensemble de déverrouillage selon la revendication 7, dans lequel la partie de support de batterie comprend un plateau (514) et un mécanisme élastique (515), le plateau (514) est relié à la première plateforme mobile (510) au travers du mécanisme élastique (515), et le plateau (514) est doté d'un trou traversant permettant à la seconde tige de déverrouillage (310) de s'étendre vers l'extérieur.

9. Ensemble de déverrouillage selon l'une quelconque des revendications 5 à 8, dans lequel le dispositif d'échange de batterie (10) comprend en outre un mécanisme de levage (530) pour soulever la plateforme de désassemblage (500) vers la position de retrait de batterie, de sorte que la seconde partie de déverrouillage (300) bute contre la première partie de déverrouillage (100) et pousse celle-ci vers la position étendue.

10. Ensemble de déverrouillage selon l'une quelconque des revendications 7 à 9, dans lequel, lorsque la première partie de déverrouillage (100) entraîne le mécanisme de verrouillage (200) à se déplacer vers la position de déverrouillage, la première plateforme mobile (510) porte le bloc-batterie (400) en vue d'entraîner le bloc-batterie (400) à se déplacer horizontalement le long d'une première direction pour retirer le bloc-batterie (400).

11. Ensemble de déverrouillage selon la revendication 10, dans lequel la première plateforme mobile (510) est en outre conçue pour entraîner le bloc-batterie (400) à se déplacer horizontalement le long d'une direction opposée à la première direction vers une position de pré-serrage déverrouillée pour libérer une limitation sur le mécanisme de verrouillage (200), de sorte que le mécanisme de verrouillage (200) est entraîné par la première partie de déverrouillage (100) à se déplacer vers la position de déverrouillage.
